# EUROPÄISCHE PATENTSCHRIFT

(11) **EP 2 698 306 B1**
(45) Veröffentlichungstag und Bekanntmachung des Hinweises auf die Patenterteilung: **21.12.2016**
(21) Anmeldenummer: 13179626.0
(22) Anmeldetag: 07.08.2013
(51) Int. Cl.: B62D 25/24, F16K 15/14

(54) **Entwässerungsstopfen**
Drainage plug
Bouchon de purge

(30) Priorität: 16.08.2012 DE 102012016250
(43) Veröffentlichungstag der Anmeldung: 19.02.2014
(73) Patentinhaber: TRW Automotive Electronics & Components GmbH, 78315 Radolfzell (DE)
(72) Erfinder: Schmidt, Martin, 67806 Rockenhausen (DE)
(74) Vertreter: Hauck Patentanwaltspartnerschaft mbB

(56) Entgegenhaltungen:
- DE-A1-102007 026 543
- DE-A1-102007 048 933

## Beschreibung

Die Erfindung betrifft einen Entwässerungsstopfen für einen Hohlraum eines Fahrzeugs, insbesondere für einen Seitenschweller, mit einem Grundkörper, der in einem Durchbruch des Seitenschwellers fixiert werden kann und eine Öffnung aufweist, in der ein Dichtungselement angeordnet ist, das zwischen einer Schließposition, in der die Öffnung dicht geschlossen ist, und einer Öffnungsposition, in der die Öffnung geöffnet ist, bewegt werden kann.

In den Hohlräumen eines Fahrzeugs beispielsweise in den Seitenschweller, sind Entwässerungsöffnungen vorgesehen, um Wasser, das sich im Hohlraum sammeln kann, abfließen zu lassen. Um während der Fahrt ein Eindringen von Feuchtigkeit oder Schmutz in den Hohlraum zu verhindern, sind Entwässerungsstopfen vorgesehen, die die Entwässerungsöffnung während der Fahrt verschließen können und im Stand die Entwässerungsöffnung offen sind, um im Hohlraum gesammeltes Wasser abfließen zu lassen.

Der Entwässerungsstopfen weist einen Grundkörper auf, der in den Durchbruch des Hohlraums eingesetzt werden kann. In diesem Grundkörper ist ein bewegliches Dichtungselement angeordnet, das zwischen einer Schließposition und einer Öffnungsposition bewegt werden kann. Im Stillstand des Fahrzeugs wird dieses Dichtungselement üblicherweise durch die Schwerkraft oder eine geringe Federvorspannung in der geöffneten Position gehalten, sodass Wasser aus dem Hohlraum abfließen kann. Im Fahrbetrieb wird das Dichtungselement durch Druckunterschiede auf der Außenseite und der Innenseite des Hohlraum in die Schließposition bewegt, sodass der Durchbruch während der Fahrt des Fahrzeugs dicht geschlossen ist und ein Eindringen von Feuchtigkeit oder Schmutz verhindert ist.

Ein solcher Entwässerungsstopfen ist beispielsweise aus der DE 10 2007 026 543 A1 bekannt. Das Dichtungselement ist hier zentrisch auf einem vertikalen Zapfen am Grundkörper gelagert und wird vertikal nach oben in die Schließposition verschoben. Zum Schutz des Dichtungselements ist ein zusätzliches Abdeckelement vorgesehen, das das Dichtungselement vor beispielsweise Steinschlag schützt. Das Dichtungselement hat aber eine sehr große Auflagefläche am Grundkörper. Dies kann zu Undichtigkeiten führen, falls Steine oder Schmutz zwischen Grundkörper und Dichtungselement gelangen. Zudem wird das Dichtungselement vollständig verschoben, wobei es unter ungünstigen Umständen zu einem Verklemmen des Zapfens kommen kann, sodass die Öffnung nicht vollständig abgedichtet werden kann.

In der DE 10 2007 048 933 A1 ist ein weiterer Entwässerungsstopfen gezeigt, der ein Dichtungselement aufweist, das über ein Filmscharnier einstückig mit dem Grundkörper verbunden ist.

Aufgabe der Erfindung ist es, einen Entwässerungsstopfen für einen Hohlraum eines Fahrzeugs, insbesondere für einen Seitenschweller, bereitzustellen, der einen einfacheren Aufbau aufweist und eine zuverlässige Abdichtung des Durchbruchs sicherstellt.

Zur Lösung der Aufgabe ist ein Entwässerungsstopfen für einen Hohlraum eines Fahrzeugs, insbesondere für einen Seitenschweller, vorgesehen, mit einem Grundkörper, der in einem Durchbruch des Seitenschwellers fixiert werden kann und eine Öffnung aufweist, in der ein Dichtungselement angeordnet ist, das zwischen einer Schließposition, in der die Öffnung dicht geschlossen ist, und einer Öffnungsposition, in der die Öffnung geöffnet ist, bewegt werden kann. Am Grundkörper oder am Dichtungselement ist eine Aufnahme vorgesehen, in der zumindest ein am Dichtungselement oder am Grundkörper vorgesehener Haltebolzen schwenkbar gelagert ist. Die Aufnahme weist eine Clip- oder Rastverbindung für den Bolzen auf. Erfindungsgemäß ist das Dichtungselement um eine Halteachse schwenkbar am Grundkörper gelagert. Die Verwendung einer Halteachse hat gegenüber andere Lösungen, beispielsweise der Anbringung des Dichtungselements an einem Zapfen oder einem anderen Element verschiebbar im Grundkörper gelagert, zum einen den Vorteil, dass das Dichtungselement nicht am Grundkörper verklemmen kann. Zum anderen wird das Dichtungselement so verschwenkt, dass Flüssigkeit über das in der Öffnungsposition schräg gestellte Dichtungselement abfließen kann, wodurch Schmutz, der sich zwischen Dichtungselement und Grundkörper ansammelt, mit der Flüssigkeit weggeschwemmt werden kann. Dadurch ist eine zuverlässigere Abdichtung der Öffnung im Grundkörper möglich. Durch die Clip- oder Rastverbindung kann der Bolzen ohne zusätzliches Werkzeug montiert werden kann. Dies erleichtert auch den Austausch des Dichtungselements, beispielsweise bei einer Beschädigung des Dichtungselements.

An der Öffnung des Grundkörpers ist beispielsweise ein umlaufender Dichtungsrand vorgesehen, an dem das Dichtungselement in der Schließposition umlaufend anliegt.

Der Dichtungsrand ist vorzugsweise auf einer Außenseite des Grundkörpers angeordnet, und das Dichtungselement wird von der Außenseite weg in die Öffnungsposition geschwenkt. Um einen vollständigen Ablauf des Wassers aus dem Hohlraum zu ermöglichen, ist der Entwässerungsstopfen an der tiefsten Stelle des Hohlraums, beispielsweise eines Seitenschwellers, angeordnet. Das Dichtungselement wird also, wenn dieses von der Außenseite weggeschwenkt wird, vertikal nach unten verschwenkt. Somit wird das Dichtungselement durch die Schwerkraft in die Öffnungsposition bewegt, sodass bei Stillstand des Fahrzeugs automatisch ein Öffnen des Entwässerungsstopfens und somit ein Abfluss des Wassers erfolgen kann. Zudem kann der Dichtungsrand so keine nach oben gerichtete Nut bilden, in der sich Wasser sammeln könnte.

Am Grundkörper kann beispielsweise ein Windabweiser, insbesondere ein Spoiler, vorgesehen sein. Durch eine entsprechende Form des Spoilers bzw. des Windabweisers auf der Außenseite des Grundkörpers kann Wasser oder Schmutz durch den Fahrtwind von der Entwässerungsöffnung weggelenkt werden, sodass ein Eindringen von Schmutz in die Öffnung oder ein Verschmutzen des Entwässerungsstopfens verhindert ist. Zudem kann der Spoiler die Druckverhältnisse an der Entwässerungsöffnung derart beeinflussen, dass das Schließen des Entwässerungsstopfens während der Fahrt unterstützt wird.

Um eine möglichst effektive Ablenkung von Wasser oder Schmutz zu bewirken, ist der Windabweiser vorzugsweise in montiertem Zustand des Entwässerungsstopfens in einer Fahrrichtung des Fahrzeugs vor der Öffnung angeordnet. Dadurch werden Schmutz oder Feuchtigkeit vor dem Auftreffen auf das Dichtungselement abgelenkt, sodass ein idealer Schutz des Dichtungselements möglich ist.

Der Grundkörper und/oder das Dichtungselement sind beispielsweise aus Kunststoff, insbesondere aus TPE hergestellt.

Weitere Vorteile und Merkmale finden sich in der nachfolgenden Beschreibung sowie in den beigefügten Figuren. In diesen zeigen:
- Figur 1 eine perspektivische Ansicht eines erfindungsgemäßen Entwässerungsstopfens,
- Figur 2 eine Schnittansicht durch den Entwässerungsstopfen aus Figur 1 in einer Schließposition,
- Figur 3 eine Schnittansicht durch den Entwässerungsstopfen aus Figur 1 in einer Öffnungsposition,
- Figuren 4a bis 4c verschiedene Ansichten des Grundkörpers des Entwässerungsstopfens aus Figur 1, und
- Figuren 5a bis 5d verschiedene Ansichten des Dichtungselements des Entwässerungsstopfens aus Figur 1.

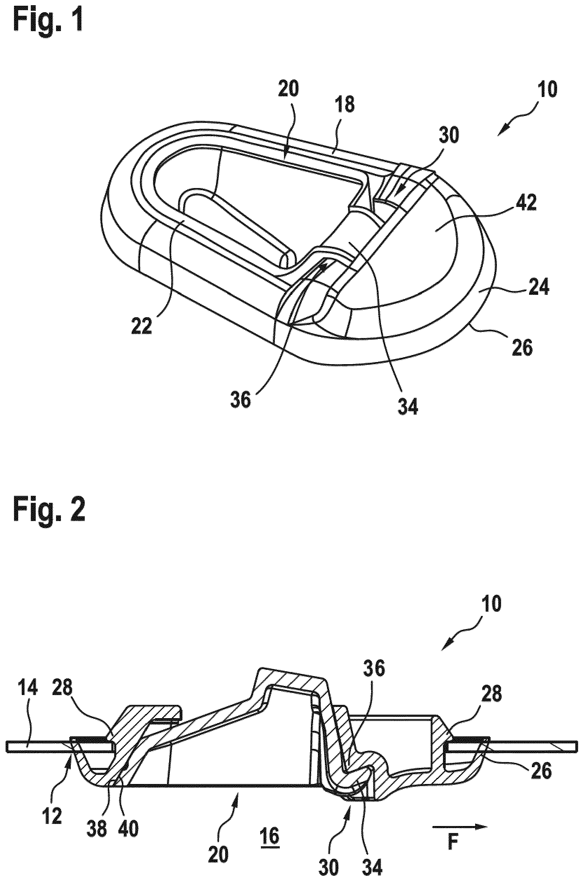

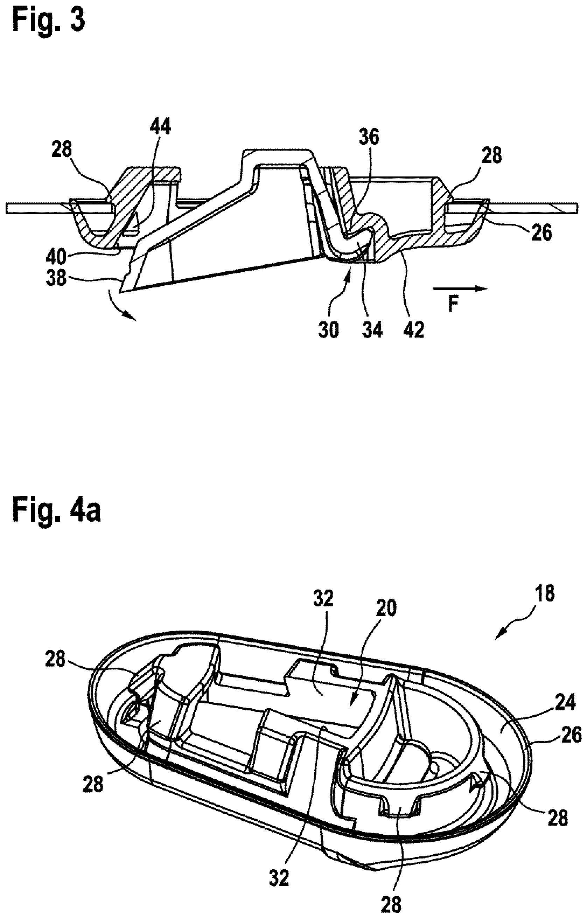

In Figur 1 ist ein Entwässerungsstopfen 10 gezeigt, der in einen Durchbruch 12 eines in einem Fahrzeugsteil, hier ein Seitenschweller 14 eines Fahrzeugs, eingesetzt werden kann (siehe auch Figuren 2 und 3). Im Hohlraum 16 dieses Seitenschwellers 14 kann sich im Betrieb des Fahrzeugs Wasser ansammeln, das durch den Durchbruch 12 aus dem Hohlraum 16 abfließen kann.

Der Entwässerungsstopfen 10 schließt den Durchbruch 12 während des Fahrbetriebs des Fahrzeugs, sodass ein Eindringen von Schmutz oder Feuchtigkeit in den Hohlraum 16 während der Fahrt verhindert werden kann. Bei Stillstand des Fahrzeugs öffnet sich der Entwässerungstopfen 10, so dass Flüssigkeit und Schmutz aus dem Hohlraum 16 abfließen können.

Der Entwässerungsstopfen 10 hat einen Grundkörper 18, der in den Durchbruch 12 eingesetzt werden kann und eine Öffnung 20 aufweist. Des Weiteren hat der Entwässerungsstopfen 10 ein Dichtungselement 22, das, wie im Folgenden dargestellt wird, schwenkbar am Grundkörper 18 gelagert ist und zwischen einer Schließposition (Figur 2), in der die Öffnung 20 abgedichtet ist, und einer Öffnungsposition (Figur 3), in der Flüssigkeit aus der Öffnung 20 abfließen kann, bewegt werden kann.

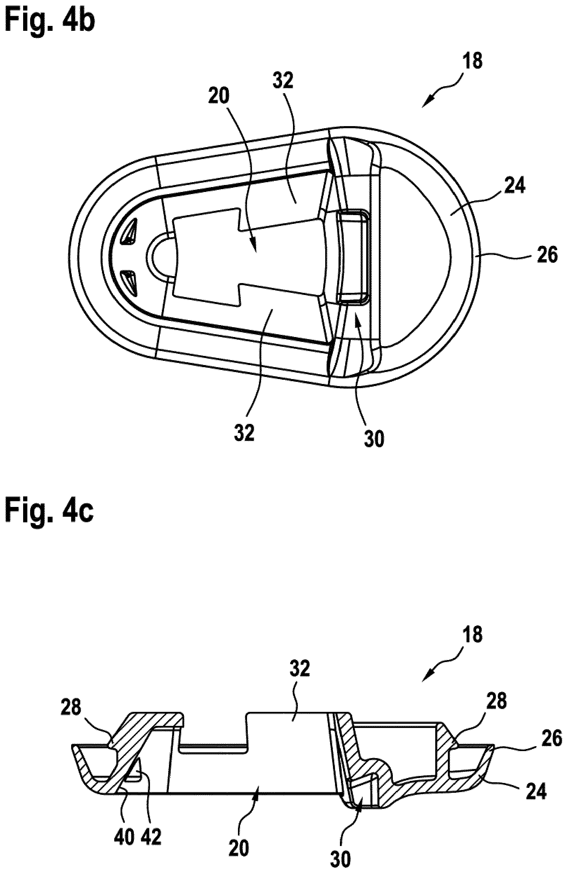

Wie in den Figuren 4a bis 4c zu sehen ist, weist der Grundkörper 18 einen um die Öffnung 20 umlaufenden Rahmen 24 auf, an dem eine Dichtlippe 26 vorgesehen ist, die am Durchbruch 12 des Seitenschwellers 14 umlaufend anliegt, sowie Rastelemente 28, mit denen der Grundkörper 18 auf der Rückseite des Seitenschwellers 14 verrastet werden kann.

Der Grundkörper 18 weist des Weiteren eine Aufnahme 30 auf, die hier als Rastverbindung ausgebildet ist, und in die das Dichtungselement 22 eingeclipst werden kann. Am Rahmen 24 sind darüber hinaus Anlageflächen 32 vorgesehen, die das Dichtungselement 22 beim Bewegen in die Schließposition führen können.

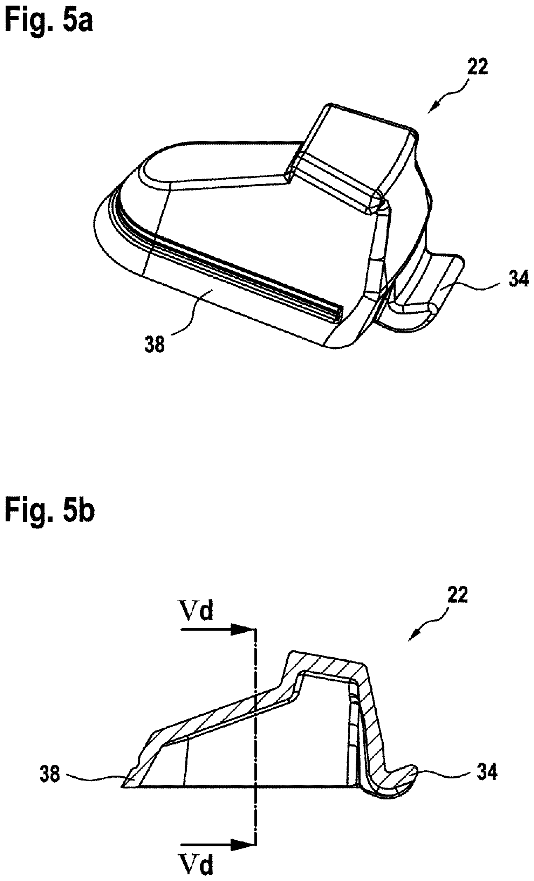

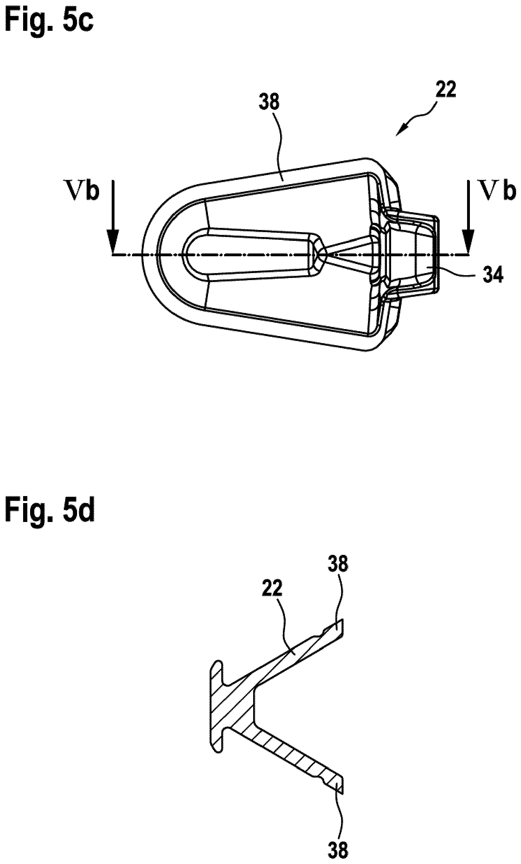

Wie in den Figuren 5a bis 5d zu sehen ist, weist das Dichtungselement 22 einen Bolzen bzw. einen Vorsprung 34 auf, der in die Aufnahme 30 am Grundkörper 18 eingeführt und an diesem verrastet werden kann. Das Dichtungselement 22 ist in der hier gezeigten Ausführungsform wannenförmig ausgebildet, sodass dieses, wie in den Figuren 2 und 3 zu sehen ist, konkav zur Innenseite bzw. zum Hohlraum 16 gewölbt ist.

Wie in den Figuren 2 und 3 zu sehen ist, ist das Dichtungselement 22 um eine Halteachse 36, die hier durch den Vorsprung 34 gebildet ist, schwenkbar gelagert.

Bei einem stehenden Fahrzeug wird das Dichtungselement aufgrund der Schwerkraft bezüglich Figur 3 nach unten in die Öffnungsposition bewegt, sodass Wasser aus dem Hohlraum 16 abfließen kann.

In der Öffnungsposition ist das Dichtungselement 22 bezüglich Figur 3 gegen den Uhrzeigersinn um die Halteachse 36 verschwenkt, sodass die Öffnung 20 geöffnet ist und Wasser aus dem Hohlraum 16 abfließen kann. Wie in Figur 3 zu sehen ist, sind an der Öffnung 20 des Grundkörper 18 weitere Aussparungen 44 vorgesehen, die durch das Dichtungselement 22 abgedichtet werden, in der Öffnungsposition des Dichtungselements 22 aber den Abfluss von Wasser aus Vertiefungen des Grundkörper 18, beispielsweise hinter der Dichtlippe 26, ermöglichen.

Im Fahrbetrieb wird das Dichtungselement 22 aufgrund der beim Fahren entstehenden Druckdifferenz zwischen Hohlraum 16 und Außenseite des Seitenschwellers 14 bezüglich der Figuren 2 und 3 nach oben bzw. im Uhrzeigersinn in die Schließposition bewegt, sodass während der Fahrt des Fahrzeugs der Hohlraum 16 abgedichtet ist und ein Eindringen von Schmutz und Wasser verhindert werden kann.

In der Schließposition liegt das Dichtungselement 22 mit einem Rand 38 umlaufend an einem Dichtungsrand 40 des Grundkörpers 18 an und dichtet so die Öffnung 20 im Grundkörper 18 fluiddicht ab, so dass das Eindringen von Schmutz oder Wasser in den Hohlraum 16 verhindert ist.

In der Schließposition liegt das Dichtungselement 22 des Weiteren an den Anlageflächen 32 des Grundkörpers 18 an. Diese stabilisieren das Dichtungselement 22, sodass keine Undichtigkeiten aufgrund einer Verformung des Dichtungselements 22 entstehen können. Zudem erfolgt beim Verschwenken in die Schließposition automatisch eine Zentrierung des Dichtungselements 22.

Am Grundkörper 18 ist des Weiteren ein Windabweiser 42 vorgesehen, der in einer Fahrtrichtung F vor der Öffnung 20 und somit vor dem Dichtungselement 22 angeordnet ist.

Der Windabweiser 42 lenkt den Luftstrom während der Fahrt zusätzlich so ab, dass das Dichtungselement 22 zusätzlich in die Schließposition gedrängt wird und Wasser bzw. Schmutz von der Öffnung 20 bzw. dem Dichtungselement 22 weg abgelenkt werden, sodass eine Verschmutzung der Öffnung 20 bzw. des Dichtungselements 22, die zu einer verringerten Abdichtung führen könnte, verhindert wird.

Der Windabweiser 42 ist in der hier gezeigten Ausführungsform in Fahrtrichtung vor dem Dichtungselement 22 angeordnet, der Windabweiser 42 könnte aber auch an einer anderen Position des Grundkörpers 18 angeordnet sein. Es ist lediglich sicherzustellen, dass dieser Schmutz und Wasser von der Öffnung 20 bzw. dem Dichtungselement 22 weglenkt.

## Patentansprüche

1. Entwässerungsstopfen (10) für einen Hohlraum (16) eines Fahrzeugs, insbesondere für einen Seitenschweller (14), mit einem Grundkörper (18), der in einem Durchbruch (12) des Hohlraums (14) fixiert werden kann und eine Öffnung (20) aufweist, in der ein Dichtungselement (22) angeordnet ist, das zwischen einer Schließposition, in der die Öffnung (20) dicht geschlossen ist, und einer Öffnungsposition, in der die Öffnung (20) geöffnet ist, bewegt werden kann, wobei das Dichtungselement (22) um eine Halteachse (36) schwenkbar im Grundkörper (18) gelagert ist, **dadurch gekennzeichnet, dass** am Grundkörper (18) oder am Dichtungselement (22) eine Aufnahme (30) vorgesehen ist, in der zumindest ein am Dichtungselement (22) oder am Grundkörper (18) vorgesehener Haltebolzen schwenkbar gelagert ist und dass die Aufnahme (30) eine Clip- oder Rastverbindung für den Bolzen aufweist.

2. Entwässerungsstopfen nach einem der vorhergehenden Ansprüche, **dadurch gekennzeichnet, dass** an der Öffnung (20) des Grundkörpers (18) ein umlaufender Dichtungsrand (40) vorgesehen ist, an dem das Dichtungselement (22) in der Schließposition umlaufend anliegt.

3. Entwässerungsstopfen nach Anspruch 2, **dadurch gekennzeichnet, dass** der Dichtungsrand (40) auf einer Außenseite des Grundkörpers (18) angeordnet ist und das Dichtungselement (22) von der Außenseite weg in die Öffnungsposition geschwenkt werden kann.

4. Entwässerungsstopfen nach einem der vorhergehenden Ansprüche, **dadurch gekennzeichnet, dass** am Grundkörper (18) ein Windabweiser (42), insbesondere ein Spoiler, vorgesehen ist.

5. Entwässerungsstopfen nach Anspruch 4, **dadurch gekennzeichnet, dass** der Windabweiser (42) in montiertem Zustand in einer Fahrtrichtung (F) des Fahrzeugs vor der Öffnung (20) angeordnet ist.

6. Entwässerungsstopfen nach einem der vorhergehenden Ansprüche, **dadurch gekennzeichnet, dass** der Grundkörper (18) und/oder das Dichtungselement (22) aus Kunststoff, insbesondere aus TPE, hergestellt sind.

## Claims

1. Drainage plug (10) for a cavity (16) of a vehicle, in particular for a side sill (14), with a basic body (18) which can be fixed in an aperture (12) of the cavity (14) and has an opening (20) in which a sealing element (22) is arranged, which sealing element can be moved between a closed position in which the opening (20) is tightly closed, and an open position in which the opening (20) is open, wherein the sealing element (22) is mounted in the basic body (18) so as to be pivotable about a holding axis (36), **characterized in that** a receptacle (30) in which at least one holding bolt, which is provided on the sealing element (22) or on the basic body (18) and is mounted pivotably, is provided on the basic body (18) or on the sealing element (22), and **in that** the receptacle (30) has a clip connection or latching connection for the bolt.

2. Drainage plug according to one of the preceding claims, **characterized in that** an encircling sealing edge (40) against which the sealing element (22) lies in an encircling manner in the closed position is provided on the opening (20) of the basic body (18).

3. Drainage plug according to Claim 2, **characterized in that** the sealing edge (40) is arranged on an outer side of the basic body (18), and the sealing element (22) can be pivoted away from the outer side into the open position.

4. Drainage plug according to one of the preceding claims, **characterized in that** a wind deflector (42) in particular a spoiler, is provided on the basic body (18).

5. Drainage plug according to Claim 4, **characterized in that** the wind deflector (42) in the mounted state is arranged in front of the opening (20) in a direction of travel (F) of the vehicle.

6. Drainage plug according to one of the preceding claims, **characterized in that** the basic body (18) and/or the sealing element (22) are/is produced from plastic, in particular TPE.

## Revendications

1. Bouchon (10) d'évacuation d'eau pour une cavité (16) d'un véhicule, en particulier pour un seuil latéral (14), le bouchon présentant un corps de base (18) qui peut être fixé dans une perforation (12) de la cavité (14) et qui présente une ouverture (20) dans laquelle est disposé un élément d'étanchéité (22) qui peut être déplacé entre une position de fermeture dans laquelle l'ouverture (20) est fermée hermétiquement et une position d'ouverture dans laquelle l'ouverture (20) est ouverte,
l'élément d'étanchéité (22) étant monté dans le corps de base (18) à pivotement autour d'un axe de maintien (36),
**caractérisé en ce que**
un logement (30) dans lequel au moins un goujon de maintien prévu sur l'élément d'étanchéité (22) ou sur le corps de base (18) est monté à pivotement est prévu sur le corps de base (18) ou sur l'élément d'étanchéité (22) et
**en ce que** le logement (30) présente une liaison clipsée ou encliquetée pour le goujon.

2. Bouchon d'évacuation d'eau selon l'une des revendications précédentes, **caractérisé en ce qu'**un bord périphérique d'étanchéité (40) sur lequel l'élément d'étanchéité (22) repose périphériquement en position de fermeture est prévu sur l'ouverture (20) du corps de base (18).

3. Bouchon d'évacuation d'eau selon la revendication 2, **caractérisé en ce que** le bord d'étanchéité (40) est disposé sur le côté extérieur du corps de base (18) et **en ce que** l'élément d'étanchéité (22) peut être incliné dans la position d'ouverture partant du côté extérieur.

4. Bouchon d'évacuation d'eau selon l'une des revendications précédentes, **caractérisé en ce qu'**un pare-vent (42) et en particulier un "spoiler" est prévu sur le corps de base (18).

5. Bouchon d'évacuation d'eau selon la revendication 4, **caractérisé en ce que** le pare-vent (42) est disposé en avant de l'ouverture (20) dans la direction de déplacement (F) du véhicule lorsqu'il est monté.

6. Bouchon d'évacuation d'eau selon l'une des revendications précédentes, **caractérisé en ce que** le corps de base (18) et/ou l'élément d'étanchéité (22) sont réalisés en matière synthétique et en particulier en TPE.
